(19) Europäisches Patentamt / European Patent Office / Office européen des brevets

(11) **EP 4 533 037 B1**

(12) **EUROPEAN PATENT SPECIFICATION**

(45) Date of publication and mention
of the grant of the patent:
**05.08.2026  Bulletin 2026/32**

(21) Application number: **22760798.3**

(22) Date of filing: **29.06.2022**

(51) International Patent Classification (IPC):
**G01F 1/661** (2022.01)    **G01F 1/7086** (2022.01)
**G01N 21/41** (2006.01)

(52) Cooperative Patent Classification (CPC):
**G01F 1/661; G01F 1/7086; G01N 21/41**

(86) International application number:
**PCT/SI2022/050020**

(87) International publication number:
**WO 2023/234874 (07.12.2023 Gazette 2023/49)**

(54) **DEVICE FOR MEASUREMENT OF FLUID FLOW AND FLOW SPEED BASED ON MEASUREMENT OF REFRACTIVE INDEXES OF FLUIDS AND A METHOD FOR DETERMINATION OF FLUID FLOW AND FLOW SPEED**

GERÄT ZUR MESSUNG EINES FLUIDDURCHFLUSSES BASIEREND AUF EINER MESSUNG DES BRECHUNGSINDEX VON FLUIDEN UND VERFAHREN ZUR BESTIMMUNG EINES FLUIDDURCHFLUSSES UND EINER DURCHFLUSSGESCHWINDIGKEIT

DISPOSITIF DE MESURE D'UN DÉBIT DE FLUIDE SUR LA BASE D'UNE MESURE DE L'INDICE DE RÉFRACTION DES FLUIDES ET PROCÉDÉ DE DÉTERMINATION D'UN DÉBIT DE FLUIDE ET D'UNE VITESSE D'ÉCOULEMENT.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2022  SI 202200089**

(43) Date of publication of application:
**09.04.2025  Bulletin 2025/15**

(73) Proprietor: **Univerza v Mariboru**
**2000 Maribor (SI)**

(72) Inventors:
• **DONLAGIC, Denis**
  **2000 Maribor (SI)**
• **PEVEC, Simon**
  **2000 Maribor (SI)**

(74) Representative: **Patentni Biro AF d.o.o.**
**Kotnikova ulica 32**
**1000 Ljubljana (SI)**

(56) References cited:
**EP-A1- 0 967 466        EP-A1- 3 885 741
DE-B3- 102014 015 555    GB-A- 2 058 340
US-A- 5 153 665**

• **SIMON PEVEC ET AL: "Miniature fiber-optic sensor for simultaneous measurement of pressure and refractive index", OPTICS LETTERS, OPTICAL SOCIETY OF AMERICA, US, vol. 39, no. 21, 1 November 2014 (2014-11-01), pages 6221 - 6224, XP001592434, ISSN: 0146-9592, [retrieved on 20141023], DOI: 10.1364/OL.39.006221**
• **FLOREA ET AL: "Using a differential refractive index detector as a pressure transducer for online viscometry in exclusion chromatography", JOURNAL OF CHROMATOGRAPHY A, ELSEVIER, AMSTERDAM, NL, vol. 878, no. 1, 5 May 2000 (2000-05-05), pages 1 - 15, XP027231904, ISSN: 0021-9673, [retrieved on 20000505]**

## Description

### Field of the invention

The present invention belongs to the field of measurement devices, particularly to the field of devices for measuring fluid flow. The invention relates to devices for measurement of fluid flow and flow velocity based on detection of differences in refractive indexes of fluids, which occur in case of installed obstacles. The devices according to the invention are suitable for reliable and direct measurement of volumetric, mass or molecular fluid flow, which represents a significant upgrade of existing devices.

### Background of the invention and the technical problem

Fluid flow measurements are required in a very wide range of technical and non-technical applications, including the process industry, food industry, pharmaceutical industry, conveyor systems, biomedical devices and many others. Unlike other sensors for measuring physical parameters, flowmeters are very diversified in terms of operating principles and different sensor designs. This is due to the complex fluid flow dynamics present in the interaction with the measuring devices. The performance and operating conditions of a measurement system are highly dependent on the measurement area and the measurement conditions. While most processes involving flow measurement require mass or molecular flow measurements, most existing methods directly measure only volumetric flows. The latter can be converted to mass or molecular flows, but this requires information on the density of the fluid being measured, which is often difficult to determine or not well defined. Current direct measurements of mass flow are limited to thermal and Coriolis principles, which have limitations in application. Thermal principles are typically suitable for lower flow rates, while Coriolis-based meters are more efficient for higher density fluids, which limits their usefulness for measuring gas flow rates.

The technical problem addressed by the present invention is the design of a flowmeter that will allow measurements of volumetric, mass, or molecular flow of fluids.

### Prior art

Differential pressure flowmeters are well known, and the principles of differential pressure flow measurement are widely recognised as a very efficient and therefore one of the most used methods for measuring fluid flows. These meters differ from the present invention in the way they are measured, as the invention does not use pressure measurement but rather the refractive index of the fluid.

Patent US6386050B1 describes a device for measuring flow by means of a heating element, which is one of the long known and used principles for measuring flow and differs significantly from the present invention.

Patents KR101605653B1 and EP3239720 disclose similar solutions for a device for measuring the flow velocity of a fluid via a refractive index measurement. The apparatus comprises a channel through which the fluid flows, a first and a second light source located anywhere in the upper and lower parts of the channel, a sensor located on the opposite side from the light source, the sensor being adapted to receive the light emitted from the first and second light sources, so that the velocity of the fluid flow can be calculated with an adapted unit using the intensity of the light received by the sensor. These two solutions differ in channel as well as in sensors. Neither of them can directly measure mass or molecular flow, which is due to the design of the device. The devices described are also not suitable for measuring gas flows.

Document EP0967466 discloses a device for measuring fluid flow based on measurement of density variations, which are linked to refractive indexes of the fluid, wherein the device comprises an optical sensor and a main pipeline arranged to allow flow of the measured fluid and the pipeline comprises a fluid flow obstacle arranged to cause Karman vortices, which feature density fluctuations measured by the optical sensor.

### Description of the solution to the technical problem

The present invention represents an important improvement of known solutions, as it is suitable for measuring the volumetric, mass or molecular flow of fluids, which has not been possible until now. The technical problem is solved as defined in the independent claims, while the preferred embodiments are presented in the dependent claims. The essence of the invention is that the measurement is based on detecting the difference in refractive indexes that occur in a fluid when an obstacle, which may be a constriction, an obstruction or any other suitable obstacle, is placed in the flow of the fluid. The system works by measuring the change in molecular density, or the accumulation of molecules in front of and behind an obstacle, which can be used to infer the velocity or flow of a fluid in the way described below. The difference in the measured refractive indices is the one that correlates with the flow rate or flow velocity of the fluid.

The operation of the flowmeter according to the invention will be most easily understood by a person skilled in the art of fluid flow measurement when the invention is compared with commonly known differential pressure-based fluid flowmeters. The principles of differential pressure-based flow measurement are widely recognised as very efficient and it is therefore one of the most frequently used flow rate measuring methods. The flowmeters according to the present invention are similar to differential or stagnation pressure meters, except that the pressure measurements are replaced by measurements of the refractive index of the fluids. As will be shown in the following analysis, the introduction of refractive index measurements to replace pressure measurements has the important advantage of allowing direct measurements not only of the volumetric, but also of the mass and molecular flow of fluids. The latter is particularly true for gases, especially gases that can be considered ideal gases or gases that approach ideal gases in properties, as is the case in many practical applications.

A refractive index-based fluid flowmeter comprises a main pipeline arranged for the flow of the fluid to be measured, said pipeline comprising:

- a fluid flow obstacle arranged to provide a difference in refractive index of the fluid; and

- at least two fluid refractive index sensors provided in different parts of the pipeline, wherein:

  ◦ the first sensor is positioned in front of (before) the obstacle and the second sensor is positioned in or behind the obstacle, or
  ◦ the first sensor is positioned in the obstacle and the second sensor is positioned behind the obstacle, or
  ◦ both sensors are provided in the obstacle, if the obstacle is designed as an obstruction element,

- and a data processing system arranged to connect to the sensors, receive the refractive index data detected at each sensor and calculate the flow rate and/or the flow velocity of the fluid.

In order to ensure the difference in refractive index measured by two refractive index sensors in the main pipeline at the established fluid flow, a suitable obstacle must be placed in the main pipeline. This obstacle can be implemented in any suitable way to ensure a difference in the refractive indices in the fluid. Preferred embodiments of the obstacle include a constriction of any shape, a throttle body, a nozzle, obstruction elements, and the like. The position and size of the obstacle is optional.

The throttle body is preferably in the form of:

- a tapered pipeline of finite length, wherein the transition between the main pipeline and the tapered section may be shaped in various ways, for example in the form of a tapered transition, wherein the transitions and the length of the tapered pipeline may take the form of standardised or non-standardised venturi nozzles or tubes,
- **an orifice** essentially made of a thin plate with at least one or more flow-through openings, which may have correspondingly sharp edges and smooth walls,
- a nozzle which, unlike orifice plates, has a rounded inlet end and a long cylindrical outlet end,
- of any shape which reduces the clear cross-section of the main pipeline in the main pipeline.

The obstruction element can be made in any 3D shape, such as cylindrical bodies, dome-shaped bodies, square bodies, conical bodies and in general any body capable of obstructing flow, or as a hollow body having at least two openings to allow the flow of fluid and at least two chambers inside.

An alternative solution for a fluid flowmeter based on refractive index measurement according to the invention does not need to be installed in the main pipeline, but the flowmeter itself comprises:

- an obstacle to the flow of fluid arranged to provide a differential refractive index in the fluid, the obstacle being designed as an obstruction element as described above; and
- at least two refractive index sensors of the fluid arranged in different parts of the flowmeter, wherein:

  ◦ the first sensor is positioned in front of the obstacle and the second sensor is positioned in or behind the obstacle, or
  ◦ the first sensor is positioned in or in front of the obstacle and the second sensor is positioned behind the obstacle, or
  ◦ both sensors are positioned in the obstacle,

- and a data processing system arranged to connect to the sensors, receive the refractive index data detected at each sensor and calculate the fluid flow.

The obstruction element can therefore be made in any 3D shape, such as cylindrical bodies, dome-shaped bodies, square bodies, conical bodies, and in general any body capable of impeding flow, or as a hollow body with at least two openings to allow the flow of fluid and at least two chambers inside.

The features of the invention described below apply both to the first embodiment, wherein a pipeline is used, and to the alternative embodiment, wherein no pipeline is required.

The flowmeter may comprise more than two refractive index sensors, and multiple sensors may be placed in the same location to provide more measurements for comparison, which could also allow a larger number of readings to be averaged. As a result, this type of flowmeter embodiment would have improved resolution and reliability.

According to a possible embodiment, the flowmeter may further comprise a means for displaying or transmitting information to a separate device, which may be used to display or transmit in real time to the user or device the sensed volumetric, mass or molecular flow rate.

In embodiments, in which fluid temperatures are predictable, temperature measurement is not required. In embodiments where the temperatures are not predictable, the flowmeter according to the invention further comprises at least one temperature sensor, which may be positioned at any location where the temperature of the fluid can be measured, preferably in the main pipeline, in the obstacle or in the vicinity of the first refractive index sensor and/or in the vicinity of the second refractive index sensor. The temperature sensor can be integrated in the refractive index sensor or it can be a separate sensor. In embodiments where there are large temperature differences between the location of the first refractive index sensor and the location of the second refractive index sensor, the flowmeter shall be equipped with at least one, preferably two, temperature sensors mounted adjacent to the refractive index sensors to minimise the error in the calculation of the fluid flow. The temperature sensor can be of any design, but a fully optical design can be particularly useful. An optical temperature sensor built on top of or along the optical fibre, for example, allows a purely dielectric connection to the data processing system. Special versions of optical refractive index sensors can also measure temperature, which means that the connection to the measurement site from the data processing system is made via a single optical fibre [4]. The possibility of integration in the form of simultaneous measurement of refractive index and absolute temperature with a sensor version on a single optical fibre is particularly important when many flowmeters need to be supported by a single data processing system or when minimum temperature differences between the refractive index and the temperature sensor customer sites need to be ensured. The latter design also allows the miniaturisation of the flowmeter.

Refractive index sensors can be any suitable sensor known to experts in the field. Refractive index measurements can be performed in many different ways, including compact, purely electrically passive optical refractive index sensors that can be connected to a remote location via purely dielectric links such as optical waveguides and especially optical fibres, allowing easy embodiment of the sensors in, for example, explosion hazardous environments, electromagnetically contaminated environments, or remote measurement sites. The possibility to produce refractive index sensors with optical fibres also allows for very compact and miniature versions of the flowmeters.

Refractive index sensors in the Fabry-Perot interferometer configuration, which can be built on top of or along the optical fibre, are an option for compact and miniature designs. Fabry-Perot sensors are characterised by consisting of two semi-transparent mirrors placed in parallel at a certain distance L from each other, so that the light waves can be partially reflected by the two mirrors and propagate in a reciprocal direction (i.e. towards the source). The waves add up with respect to the optical path, which is the product of the refractive index of the material and the physical distance L between the two mirrors, leading to an interference phenomenon. The reflected light waves are further processed using various techniques to determine or measure the optical path with high resolution. Using various micromachining techniques, such as femtosecond laser, ion beam, selective etching and MEMS processes, it is possible to create an empty space between the two mirrors of the Fabry-Perot interferometer, which, in the case of refractive index measurements, is filled with a fluid. This makes the optical path of the Fabry-Perot sensor sensitive to changes in the refractive index, which can also be measured with very high resolution, up to $10^{-9}$ refractive index units [3]. The ability to measure the refractive index with high resolution is of great importance for the proposed invention, since the resolution of the refractive index measurement is directly related to the resolution of the flow measurement.

The optical sensors in the Fabry-Perot interferometer configuration are connected to a data processing system and may have various subsystems built-in, e.g. for spectral analysis. Both high-resolution and low-resolution spectrum analysers and various optical interrogators are commercially available. The combination of spectrum analyser, optical source and optical divider allows the construction of a measurement line to which different optical sensors can be connected in a Fabry-Perot interferometer configuration, while optical interrogators are already adapted for this type of spectral analysis without additional optical components. An alternative and well-known method for signal discrimination is the use of wavelength tunable laser subsystems. This approach is feasible in combination with an optical divider and a laser-synchronised optical power meter. High-power adjustable laser sources are available, which allow wavelength tuning over a wide wavelength range with high resolution, as well as simple DFB laser diodes, which can be wavelength tunable reproducibly over a narrow spectral range with appropriate techniques. By replacing high-power laser sources with simple DFB laser diodes, we can significantly reduce the cost of signal discrimination.

In possible versions of the flowmeter after the invention, it is possible and advisable to protect the sensors with particulate filters, such as high efficiency HEPA filters. Any refractive index and/or temperature sensor can be coated with particulate filters and the measurement result will not be affected, but the time of the required service intervals and the lifetime of the sensors will be significantly extended.

The flowmeter can also be implemented using at least one, and possibly two or more, hydraulic connection lines, allowing the refractive index sensors to be moved out of the main pipeline and/or obstruction area, thus protecting the sensors from dynamic and other disturbing influences in the fluid. This is possible regardless of the type of obstacle used in the flowmeter. Dynamic phenomena in fluids can cause measurement error due to increased vibration at the sensor and, in cases of contaminated fluids, can shorten service intervals, which can also lead to a reduction in the lifetime of the sensor. When using hydraulic lines, it is easier to upgrade the flowmeters with different particulate filters, such as high efficiency HEPA filters. The filters shall be installed in the hydraulic line between the main line and the sensor, if necessary, so that the only possible fluid path from the main line to the sensor is through the filter body.

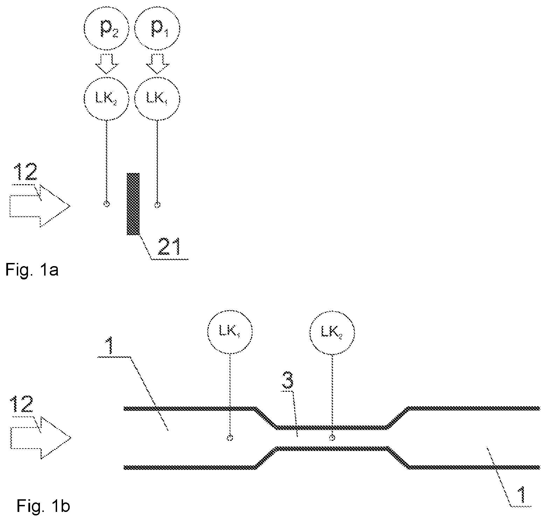

Regardless of the configuration of the flowmeter, obstacles and other optional components, the flow velocity can be calculated by the data processing system from the refractive index information detected by at least two sensors. The well-known equation for the flow velocity, which applies to all fluid flowmeters consisting essentially of an obstacle and equipped with a differential pressure measurement as shown in Figure 1a, is written as:

$$v = \alpha \sqrt{\frac{2}{\rho}(p_1 - p_2)} \qquad (1)$$

Where density is $\rho$, $\alpha$ represents the flow coefficient, which can be treated as a constant at sufficiently large values of Reynolds number and can usually be determined by a calibration procedure. The coefficient $\alpha$ depends on the flow profile, the actual position of the flowmeters and other influencing factors.

The system works by measuring the change in molecular density, or the accumulation of molecules in front of and behind the obstacle, from which the velocity or flow of the fluid can be inferred.

The fact is that all fluids are at least partially compressible, and gases are even highly compressible. The flow of particles, molecules, hitting the obstacle is stopped or slowed down, causing local thickening of the fluid in front of the obstacle. These changes in the number of molecules per unit volume can be effectively measured optically by measuring the refractive index. By measuring the difference in the refractive index of the fluid at a suitable distance from the obstacle and immediately in front of, in front of, behind or in similar configurations, we can infer the flow or flow velocities.

For fluids for which we do not know the compressibility and rheological properties, or for which the fluid properties change in a complex way (e.g. non-Newtonian fluids), we can plot the velocity versus the difference of the refractive indices, based on the calibration performed, using the following relation:

$$v = f(n_1 - n_2) \qquad (2)$$

Here, the functional dependence of *f* is determined by a suitable calibration procedure, e.g. by continuously increasing the reference fluid velocity in the calibration system while recording the difference in refractive indices. The resulting data is tabulated and then the functional relationship between the difference in refractive indexes and the velocity is determined by an appropriate choice of mathematical function (e.g. polynomial) and an approximation algorithm.

In many cases, it is useful to normalise the refractive index values, as these can also depend on other factors such as temperature and fluid density. In this case, the fluid velocity can be defined as a function of the normalised difference of the refractive indices in the following form:

$$v = f\left(\frac{n_1 - n_2}{n_2 - 1}\right) \qquad (3)$$

In certain cases, many fluids will also exhibit a square root dependence, giving equations 2 and 3 the following form:

$$v = k\sqrt{(n_1 - n_2)} \qquad (4)$$

$$v = k\sqrt{\left(\frac{n_1 - n_2}{n_2 - 1}\right)} \qquad (5)$$

Where k is the calibration constant.

In the case where the refractive index measurement is used to determine the volumetric, mass or molecular flow, this can be done in embodiments where the flowmeter is installed in the pipeline, and the calculation must take into account the geometric properties of the flowmeter, such as the cross-section of the pipeline and other properties that are either encapsulated in the functional dependence f or in the calibration constant k.

For fluids for which we do not know compressibility, rheological, other properties, or the fluid properties or flow vary in a complex way (e.g. non-Newtonian fluids), we can write the relationship between volumetric flow rate $\phi_V$, mass flow rate $\phi_m$ and molecular flow rate $\phi_M$ as a function of the difference in refractive indices as:

$$\phi_V = A f_V (n_1 - n_2) \qquad (6)$$

$$\phi_m = A f_m (n_1 - n_2) \qquad (7)$$

$$\phi_M = A f_M (n_1 - n_2) \qquad (8)$$

Where A is the cross-section of the pipeline, $f_V$, $f_m$ and $f_M$ are the functional dependencies determined by the respective calibration procedures.

In many cases, it is useful to normalise the refractive index values, as these can also depend on other factors such as temperature and fluid density. In this case, it is possible to define the volumetric flow rate $\phi_V$, the mass flow rate $\phi_m$ and the molecular flow rate $\phi_M$ of a fluid as a function of the normalised difference of the refractive indices in the shape:

$$\phi_V = A f_V \left( \frac{n_1 - n_2}{n_2 - 1} \right) \qquad (9)$$

$$\phi_m = A f_m \left( \frac{n_1 - n_2}{n_2 - 1} \right) \qquad (10)$$

$$\phi_M = A f_M \left( \frac{n_1 - n_2}{n_2 - 1} \right) \qquad (11)$$

Where A is the cross-section of the pipeline, $f_V$, $f_m$ and $f_M$ are the functional dependencies determined by the respective calibration procedures.

In certain cases, many fluids will also exhibit a square root dependence of the volume $\phi_V$, mass $\phi_m$ and molecular $\phi_M$ flows on the difference of the refractive indices, giving equations 9, 10 and 11 the following form:

$$\phi_V = A k_V \sqrt{n_1 - n_2} \qquad (12)$$

$$\phi_m = A k_m \sqrt{n_1 - n_2} \qquad (13)$$

$$\phi_M = A k_M \sqrt{n_1 - n_2} \qquad (14)$$

Where $k_V$, $k_m$ and $k_M$ represent the calibration constants obtained by calibrating the volume $\phi_V$, mass $\phi_m$ and molecular flowmeters $\phi_M$.

In many cases, it is useful to normalise the refractive index values, as these can also depend on other factors such as temperature and fluid density. In this case, the volumetric $\phi_V$, mass $\phi_m$ and molecular $\phi_M$ flow of the fluid can be defined as the square root function of the normalised difference of the refractive indices multiplied by the cross-sectional area of the pipeline. The connections can be written using the following equations:

$$\phi_V = A k_V \sqrt{\frac{n_1 - n_2}{n_2 - 1}} \qquad (15)$$

$$\phi_m = Ak_m\sqrt{\frac{n_1-n_2}{n_2-1}} \qquad (16)$$

$$\phi_M = Ak_M\sqrt{\frac{n_1-n_2}{n_2-1}} \qquad (17)$$

Where A represents the cross section of the pipeline and $k_v$, $k_m$ and $k_m$ represent the calibration constants obtained during the calibration of the volume $\phi_V$, mass $\phi_m$ and molecular flowmeters respectively $\phi_M$.

A particularly important embodiments of the present invention relates to the measurement of gas flows. For cases where the measured fluid is a gas, equation (1) can be reformulated using the Gladstone-Dale connection:

$$n - 1 = k\rho \qquad (18)$$

where k is the Gladstone-Dale coefficient, n is the refractive index of the gas and $\rho$ is the density. The Gladstone-Dale coefficient is gas-specific and can be determined by appropriate measurement. From the gas equation:

$$\rho = \frac{p}{RT} \qquad (19)$$

And equation (1) goes into the following simplified form

$$v = \alpha\sqrt{2RT\frac{n_1-n_2}{n_2-1}} \qquad (20)$$

Where T represents the absolute average temperature at the refractive index measurement point.

The above simplified equation is correctly written if the temperature measured at both measuring points is taken into account, which is written as:

$$v = \alpha\sqrt{2R\frac{T_1n_1-T_2n_2}{n_2-1}} \qquad (21)$$

Where R represents the overall gas constant, $T_1$ the temperature at the measurement site where $n_1$, $T_2$ the temperature at the measurement site where $n_2$, and k the Gladstone-Dale coefficient.

In cases where flow rates are measured in pipelines, volumetric, mass or molecular flow rates can be calculated. The procedure for calculating the volumetric, mass or molecular flow from the refractive indices for the case of gas flow measurement through a pipeline shall be obtained by an appropriate computational link. According to Figure 1B, the volumetric flow rate at each point through the main line can be calculated by the product of the flow rate through the main line with a known cross-section A, giving equation (20) the following form:

$$\phi_V = \alpha A\sqrt{2RT\frac{n_1-n_2}{n_2-1}} \qquad (22)$$

Where T represents the absolute temperature at the point of refractive index measurement.

If the temperature measured at the two measuring points is also taken into account, equation (22) is written as:

$$\phi_V = \alpha A\sqrt{2R\frac{T_1n_1-T_2n_2}{n_2-1}} \qquad (23)$$

Where R represents the overall gas constant, $T_1$ the temperature at the measurement site where $n_1$, $T_2$ the temperature at the measurement site where $n_2$, and k the Gladstone-Dale coefficient. The volume flow equations (22) and (23) thus become independent of the gas density. The relationship between the difference in refractive index and mass flow rate is obtained by multiplying the above equation by the density of the gas:

$$\phi_m = \phi_V \rho = \alpha A \sqrt{2RT \frac{n_1 - n_2}{n_2 - 1} \frac{n_2 - 1}{k}} = \frac{\alpha A}{k} \sqrt{2RT(n_1 - n_2)(n_2 - 1)} \qquad (24)$$

Where T represents the absolute temperature at the point of refractive index measurement.

However, equation (24) can be rearranged to take account of individual temperatures and written as:

$$\phi_m = \frac{\alpha A}{k} \sqrt{2R(T_1 n_1 - T_2 n_2)(n_2 - 1)} \qquad (25)$$

However, since the Gladstone-Dale coefficient can be expressed in terms of the Lorenz-Lorenz relation [1]:

$$k = \frac{3}{2} \frac{N_A \gamma}{3M} \qquad (26)$$

where y represents the mean polarizability of the gas molecules, Na the Avogadro number and M the molar mass of the gas, equation (24) can be further represented as:

$$\phi_m = 2\alpha A \frac{M}{\gamma N_A} \sqrt{2RT(n_1 - n_2)(n_2 - 1)} \qquad (27)$$

Taking into account the temperature at both refractive index measurement points, equation (27) becomes:

$$\phi_m = 2\alpha A \frac{M}{\gamma N_A} \sqrt{2R(T_1 n_1 - T_2 n_2)(n_2 - 1)} \qquad (28)$$

Dividing equation (27) by the molecular mass M of the gas gives the equation for the molecular flow:

$$\phi_M = \frac{\phi_m}{M} = \alpha A \frac{2}{\gamma N_A} \sqrt{2RT(n_1 - n_2)(n_2 - 1)}, \qquad (29)$$

which, if the temperature of the fluid at both refractive index measuring points is taken into account, goes to:

$$\phi_M = \frac{\phi_m}{M} = \alpha A \frac{2}{\gamma N_A} \sqrt{2R(T_1 n_1 - T_2 n_2)(n_2 - 1)} \qquad (30)$$

As can be seen from the expressions presented above, the measurement of the refractive index of a gas allows a direct calculation of the velocity only with knowledge of the basic physical characteristics of the gas and knowledge of the geometry of the measuring device. Apart from the flow coefficient $\alpha$ and the cross-section of the pipeline A, which are mostly geometrically defined, the volume flow depends only on the refractive index and the difference in refractive indices, which can be measured directly. While the mass flow rate also depends on the Gladstone-Dale coefficient, which is related to the type of gas, the latter can be considered as a constant over a wide pressure range [2]. The molecular flow depends only on the refractive index and the mean polarizability of the gas molecules, which is a property of gas molecules at the optical frequencies of interest. In all three of the above cases, the equations are written independently of the gas density.

The equations (20 to 30) presented above are valid for the measurement of gas flows that can be treated as ideal gases, which is an acceptable assumption in a wide range of practical applications. Where fluids deviate significantly from ideal gases, the above equations (20 to 30) can be applied with appropriate measurement corrections or calibration. The equations (20 to 30) are valid for different examples and different possible embodiments of the flowmeters, which will be presented below. In most cases, it is necessary to determine the flow rate $\alpha$ in individual embodiments, which can be done by a suitable calibration process and with the aid of appropriate calibration equipment known to experts in the field.

The method of determining the gas flow rate using the flowmeter as described above involves the following steps:

    a) Measurement of at least two refractive indices of a fluid using at least two refractive index sensors,
    b) Calculating the flow velocity using the data obtained in step a) and equation 20 or equation 21, and
    c) Preferably calculating the volume and/or mass and/or molecular flow, where:

    -   the volumetric flow rate is calculated using the data obtained in step a) or step b) and equation 22 or equation 23,
    -   the mass flow rate is calculated using the data obtained in step a) or step b) and equation 24 or equation 25,

- the molecular flow rate is calculated using the data obtained in step a) or step b) and equation 29 or equation 30.

The measurement principle according to the invention can also be applied to most existing flowmeters based on differential pressure measurements by simply replacing the pressure sensors with refractive index sensors. Replacing pressure sensors with refractive index sensors results in a measurement system that is independent of gas density and directly proportional to molecular or mass flow, which can lead to the possibility of direct mass and molecular flow measurements using well-known and established flowmeter platforms. This represents an opportunity to introduce glass fibre based refractive index sensors, enabling the design of remote, electromagnetically immune, purely dielectric and purely electrically passive flowmeters.

The fluid flowmeter based on refractive index measurement will be described in more detail below with the help of non-limiting embodiments and figures showing:

| Figure 1 | Illustration of the measuring principle of the flowmeter according to the invention |
| --- | --- |
| Figure 2 | Embodiment of a flowmeter wherein the obstacle is a throttle body |
| Figure 3 | Embodiment of the flowmeter shown in Figure 2 with a temperature sensor added |
| Figure 4 | Embodiment of a flowmeter which differs from the first one in the arrangement of the refractive index sensors |
| Figure 5 | Embodiment of the flowmeter shown in Figure 2 with two temperature sensors |
| Figure 6 | Embodiment of the flowmeter shown in Figure 4 with two temperature sensors |
| Figure 7 | Embodiment of a flowmeter having one hydraulic line in which one of the refractive index sensors is installed |
| Figure 8 | Embodiment of a flowmeter having two hydraulic lines, each equipped with a refractive index sensor |
| Figure 9 | Embodiment of the flowmeter in Figure 9 with two temperature sensors |
| Figure 10 | Embodiment of the flowmeter in Figure 7 with two temperature sensors |
| Figure 11 | Embodiment of a taper-shaped throttle element |
| Figure 12 | Embodiment of a diaphragm-shaped throttle element |
| Figure 13 | Embodiment of a throttle element in the form of a tapered duct |
| Figure 14 | Embodiment of a throttle element in the form of a 3D body in contact with one of the pipeline surfaces |
| Figure 15 | Embodiment of a throttle element in the form of a 3D body in the centre of the pipeline |
| Figure 16 | Embodiment of a flowmeter wherein the obstacle is an obstruction body and the sensors are located upstream and downstream of the obstruction body |
| Figure 17 | The embodiment of the flowmeter shown in Figure 16, wherein one of the sensors is mounted on the obstruction body |
| Figure 18 | The embodiment of the flowmeter shown in Figure 16, wherein one of the sensors is mounted in the obstruction body |
| Figure 19 | The embodiment of the flowmeter shown in Figure 16, wherein both sensors are mounted in the obstruction body |
| Figure 20 | The embodiment of the flowmeter shown in 16, wherein the temperature sensor is mounted on the front side of the obstruction body |
| Figure 21 | The embodiment of the flowmeter shown in Figure 16, wherein the temperature sensor is mounted on the rear side of the obstruction body |
| Figure 22 | The embodiment of the flowmeter shown in Figure 16, wherein the temperature sensor is integrated in the obstruction body |
| Figure 23 | The embodiment of the flowmeter shown in Figure 16, wherein the temperature sensor is mounted next to each refractive index sensor |
| Figures 24 to 27 | Embodiment of a flowmeter wherein the obstruction body is a hollow body with two chambers |

(continued)

| Figure 28 | Embodiment of a flowmeter wherein the obstruction body is a hollow body and each refractive index sensor is integrated in its own hydraulic line |
|---|---|
| Figures 29 and 30 | Embodiment of a flowmeter wherein the obstruction body is a hollow body and one refractive index sensor is installed in one hydraulic line and the other sensor is installed in one of the chambers of the hollow body |
| Figure 31 | Definition of the aperture vector. |

The principle of operation of the flowmeter according to the invention is illustrated in Figures 1a and 1b, wherein Figure 1a is representative of an obstacle in the form of an obstruction body and Figure 1b is representative of an obstacle in the form of a throttling body. In both cases, the fluid flow 12 is such that it leads to the obstacle 3, 21, while the refractive index measurement points are located at different places. Both refractive index sensors are arranged to detect the refractive index value and to transmit the data to the data processing system, which can calculate or determine the flow of fluid through pipeline 1.

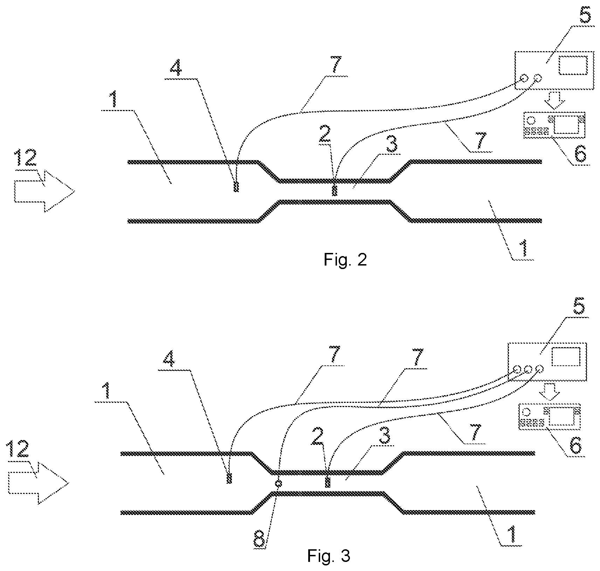

A possible embodiment of a flowmeter according to the invention is shown in Figure 2 and comprises a main pipeline 1 through which the fluid to be measured flows, in which an obstacle in the form of a throttle body 3 is disposed, a first refractive index sensor 4 of the fluid disposed upstream of the throttle body 3, a second refractive index sensor 2 disposed in the throttle body 3, and a data-processing system 5 which is connected to the refractive index sensors and which receives from them refractive index data from the first and second refractive index sensors. In this embodiment, the throttle body is designed as a symmetrical constriction of the pipeline.

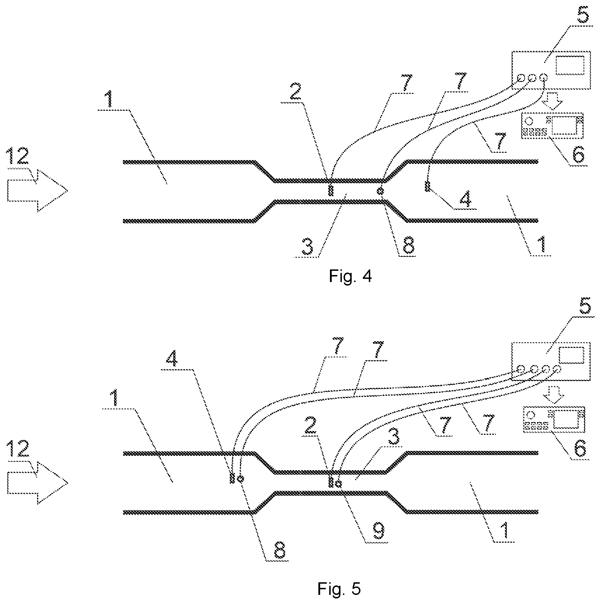

Further possible examples of the flowmeter are shown in Figure 3 and Figure 4. Both examples consist essentially of a main pipeline 1 through which the fluid to be measured flows, a first refractive index sensor 4, a throttling element 3, a second refractive index sensor 2 embedded in the throttling element 3, and a data processing system 5. In addition, the temperature sensor 8 is positioned between the two refractive index sensors in the throttling element 3 so that the average absolute temperature of the fluid can be measured with only one temperature sensor 8. In the embodiment in Figure 3, the first refractive index sensor 4 is mounted in front of the throttle body 3 and the second refractive index sensor 2 is mounted in the throttle body 3. In the embodiment in Figure 4, the order is reversed and the first refractive index sensor 4 is mounted behind the throttle body 3 and the second refractive index sensor 2 is mounted in the throttle body 3. Both sensors 2 and 4 are connected to the data processing system 5 via a dielectric waveguide 7.

In embodiments where there are large temperature differences between the location of the first refractive index sensor and the location of the second refractive index sensor, the flowmeter as shown in Figures 2 to 4 shall preferably be equipped with two temperature sensors mounted adjacent to the refractive index sensors 2 and 4, as shown in Figures 5 and 6, thus minimising the error in the calculation of the fluid flow.

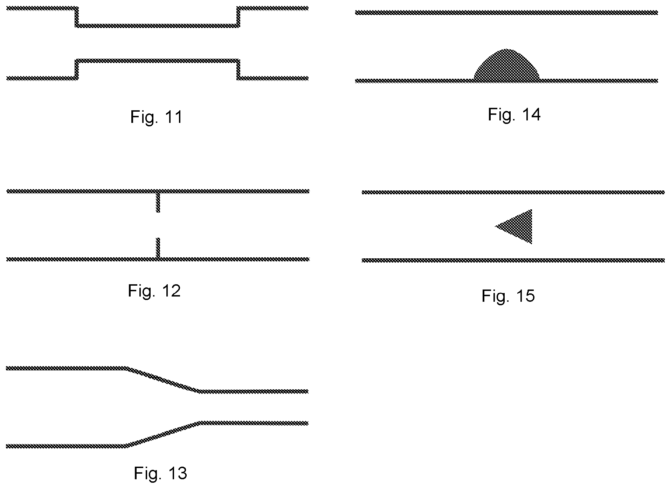

Figures 11 to 15 show different throttle body designs. In the embodiment in Figure 11, the throttle body is in the form of a tapered pipeline of finite length, where the transition between the main pipeline and the tapered section may be formed in various ways, for example in the form of a tapered transition. The passages and the length of the tapered pipeline may take the form of standardised or non-standardised venturi nozzles or tubes. In the embodiment in Figure 12, the throttle body is in the form of a diaphragm, which is essentially made of a thin plate with at least one or more flow-through openings, which may have correspondingly sharp edges and smooth walls. In the embodiment in Figure 13, the throttle body is in the form of a nozzle which, unlike the orifice, has a rounded inlet end and a long cylindrical outlet end. In the embodiment in Figure 14, the throttle body shall be of any shape which reduces the clear cross-section of the main pipe in the main pipe. The throttle body of any shape shown in Figure 15 is placed in the centre of the main pipework where, for example, conical throttle body shapes may be used. Otherwise, the positions of the throttle body of any shape may be varied, which means that a throttle body of any shape may fit with the pipe on one side or occupy any position within the cross-section of the main line 1.

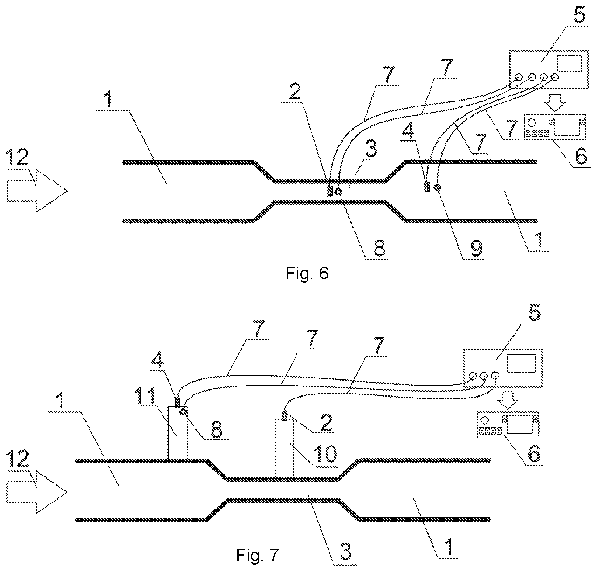

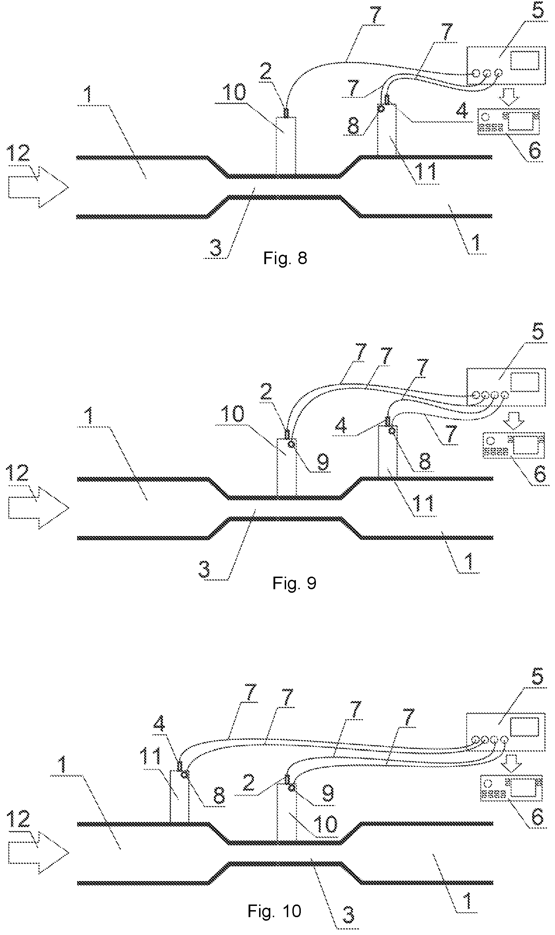

The flowmeter can also be implemented using at least one, preferably several, hydraulic connection lines 10 and 11, as basically shown in Figures 7 and 8, wherein the flowmeter comprises a main pipeline 1 through which the measured fluid flows, the hydraulic connection line 11 of the first refractive index sensor 4, the first refractive index sensor 4 of the fluid, the throttle body 3, the hydraulic connection line 10 of the second refractive index sensor 2, the second refractive index sensor 2, and the data processing system 5. In the example of Figure 7, the first refractive index sensor 4 is mounted upstream of the throttle body 3 via the hydraulic connection line 11 and the second refractive index sensor 2 is mounted in the throttle body 3 via the hydraulic connection line 10. In the example of Figure 8, the order is reversed and the second refractive index sensor 2 is installed via the hydraulic connection line 10 into the throttle body 3 and the first refractive index sensor 4 is installed via the hydraulic connection line 11 downstream of the throttle body 3. Both versions can be upgraded with at least one temperature sensor 8. Both sensors 2 and 4 are connected to the data processing system 5 via a dielectric waveguide 7.

In flowmeter embodiments where the sensors are not located directly in or adjacent to the main piping and where temperatures are not predictable, the flowmeters shall be upgraded with a temperature sensor to be installed at the location of the hydraulic connection line 11 wherein the first refractive index sensor 4 is installed, as shown in Figure 7 and Figure 8. However, in embodiments wherein larger temperature differences are expected between the two tap points wherein the refractive index sensors are installed, the temperature sensor shall be installed at both tap points on the hydraulic line, i.e. next to the second refractive index sensor, as shown in Figure 9 and Figure 10.

Instead of a throttle body, the obstacle may be formed by an obstruction element or body, as shown in the following design examples. The obstruction element can be used in a flowmeter with a main pipeline or in a flowmeter where no pipeline is needed. The latter is particularly suitable for measuring the velocity of aircraft and vessels when such a sensor is mounted away from the fuselage.

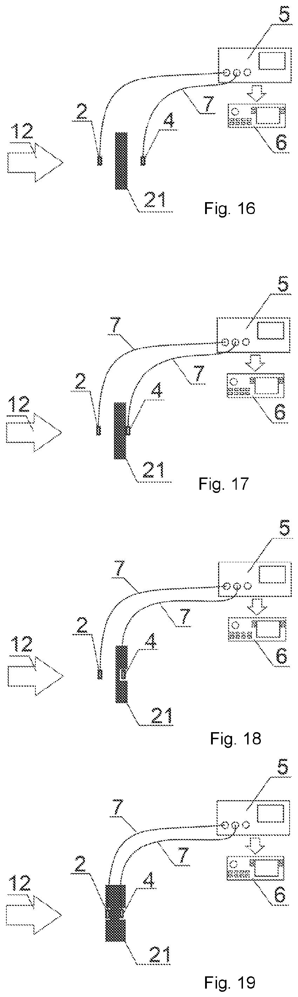

Thus, a possible embodiment of a flowmeter according to the invention is shown in Figure 16 and comprises an obstruction body 21, a first fluid refractive index sensor 4, a second refractive index sensor 2 and a data processing system 5. The data processing system is connected to the refractive index sensors and receives from them the refractive index data from the first and second refractive index sensors. From the refractive index information, it calculates the fluid velocity, which is directly proportional to the square root of the difference in refractive indexes, as described above. In the case where the flowmeter is installed in a pipeline of known cross-section $A$, the system also calculates the volumetric, mass or molecular flow rate and displays or transmits it to the user or to the device 6 using the flow rate, volumetric, mass or molecular flow rate data.

Three typical embodiments of flowmeters according to the invention are shown in Figure 16, Figure 17 and Figure 18. All three examples basically consist of an obstruction body 21, a first fluid refractive index sensor 4, a second fluid refractive index sensor 2 and a data processing system 5. In the embodiment shown in Figure 16, both refractive index sensors are positioned in the vicinity of the impounding body 21, with the first refractive index sensor 4 positioned downstream and the second refractive index sensor 2 positioned upstream of the obstruction body. One or both of the refractive index sensors may also be mounted touching or connected to the obstruction body 21, an embodiment where one refractive index sensor is touching the obstruction body is shown in Figure 17. The obstruction body can also be designed in such a way that one or both refractive index sensors can be integrated in the obstruction body, which in certain cases can protect the refractive index sensor from aggressive or contaminated fluids. An example of one refractive index sensor 4 integrated in an obstruction body 21 is shown in Figure 18.

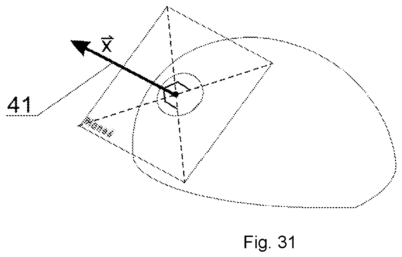

One way of measuring flow based on the difference in refractive index is by introducing a hollow body 22. A hollow body is a body that can be of any shape, closed on all sides except where openings are provided for the exchange of fluid with the surroundings. Hollow flow measurement bodies must also comprise an obstruction body which divides the hollow body into at least two chambers of any volume ratio. Each of the two chambers has at least one aperture, the direction of which is defined by the aperture vector 41. The vector of the aperture 41 points into the space surrounding the body and is perpendicular to the plane that best fits the points on the edge of the aperture where the aperture has the smallest cross-section, as shown in Figure 31.

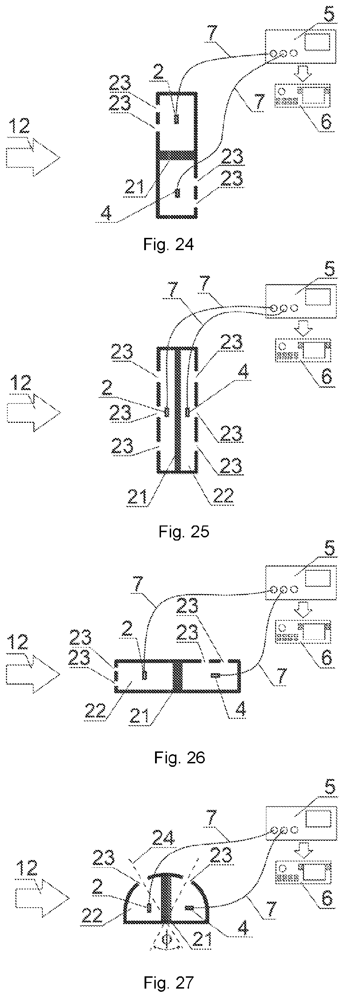

The two typical embodiments shown in Figure 24 and Figure 25 are implemented in such a way that the hollow body 22 has one or more apertures 23 wherein the vector or vectors of the apertures are oriented in the upstream direction and one or more apertures wherein the vector or vectors of the apertures are oriented in the downstream direction of the flow 12. Both embodiments further comprise a first fluid refractive index sensor 4, a second fluid refractive index sensor 2 and a data processing system 5 as shown in Figure 24 and Figure 25. A particular feature of the embodiment according to Figure 24 is that the obstruction body in the hollow body is arranged at an angle different from 90 degrees with respect to the vector of openings, which divides the hollow body into two arbitrary chambers for the accommodation of the refractive index sensors and, if necessary, the temperature sensor. In the embodiment shown in Figure 25, the hollow body can be divided by a stop body at an angle of 90 degrees to the axis of the openings, allowing the openings to be positioned along the entire length of the hollow body wall, which is often used for averaging the flow profile in flow systems.

The following embodiment shown in Figure 26 comprises a hollow body 22 with one or more apertures 23 having a vector of apertures oriented in the upstream direction and one or more apertures 23 wherein the vector of apertures is perpendicular to the direction of flow 12. The embodiment in Figure 26 further comprises a first fluid refractive index sensor 4, a second fluid refractive index sensor 2 and a data processing system 5. This type of design is particularly desirable in systems wherein flow velocities are high and damping is required to be as low as possible, depending on the cross-section of the hollow body, wherein the cross-section of the hollow body is defined as the projection of the surface area of the hollow body onto the direction of flow.

Hollow bodies can also be used to measure flow rates, with openings at different angles to the direction of flow, so that the refractive index range can be adjusted as needed at specific flow rates. One such example is shown in Figure 27, wherein the vectors of the apertures intersect in at least one projection at an angle of 20° or more.

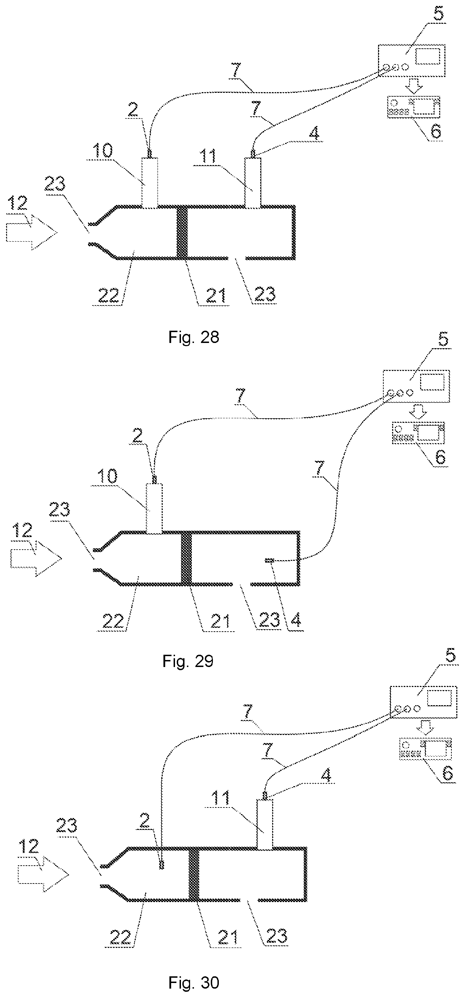

The flowmeters described above are also possible using hydraulic connection lines 10 and 11 as shown in Figures 28, 29 and 30. The hydraulic line design allows the refractive index sensors and temperature sensors to be removed from the hollow body area 22, further protecting the sensors from fluid dynamic phenomena and contamination, or simplifying the installation of the sensors. When using hydraulic lines, it is easier to upgrade the flowmeters with different particulate filters, such as high efficiency HEPA filters. The filters shall be placed in the hydraulic line between the hollow body and the sensor, if necessary, so that the only possible fluid path from the hollow body to the sensor is through the filter body. Other arrangements are of course also possible, e.g. around refractive index sensors.

The version of the flowmeter with integrated hydraulic lines according to Figure 28 consists of a hollow body 22 inserted into the fluid flow in direction 12, a hydraulic connection line 11 of the first refractive index sensor, the first refractive index sensor of the fluid 4, the impounding body 21, the hydraulic connection line 10 of the second refractive index sensor, the second refractive index sensor 2, and the data processing system 5. If temperatures are not predictable, temperature sensors are added to the refractive index sensors so that the difference between the measured temperature and the gas temperature at the refractive index sensor is minimal. If only one temperature sensor is used to measure the average temperature of the fluid, the temperature sensor can be mounted next to the refractive index sensor 4 on the hydraulic connection line 11.

The embodiment in Figure 29 shows an option with only one hydraulic line 10 used for the refractive index sensor 2. In this way, only the refractive index sensor 2, which is most exposed to these loads given the known direction of flow 12, was removed from the area of higher dynamic loads. The embodiment in Figure 30 also illustrates a situation wherein only one refractive index sensor 4, this time the first one, is displaced from the hollow body and placed in the hydraulic line 11.

In the examples of Figures 28, 29 and 30, the data processing system 5 is connected to the refractive index sensors, from which it receives refractive index data from the first refractive index sensor 4 and the second refractive index sensor 2. It calculates the velocity or flow rate of the fluid from the refractive index information and displays or transmits it to the user or device 6 using the flow rate information.

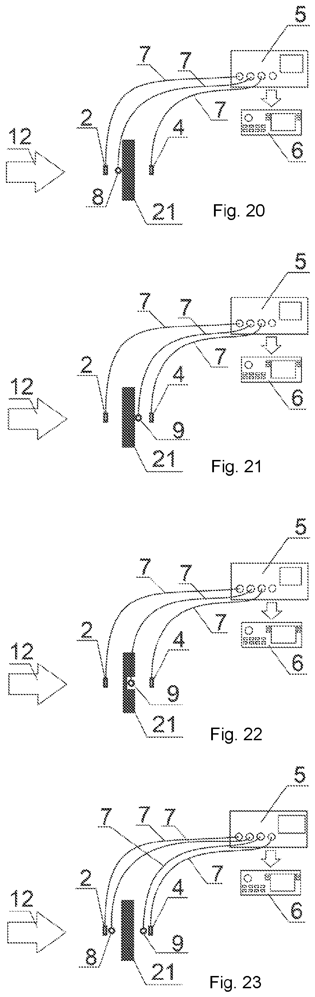

In practical cases where temperatures are unpredictable, the flowmeter is upgraded with a temperature sensor that can be placed in different locations in order to be able to measure the average absolute temperature of the fluid flowing through the area of the two refractive index sensor tapping points with only one temperature sensor. Temperature sensors are labelled with different markings to indicate whether the temperature sensor is upstream or downstream of the obstruction. In the embodiment of Figure 20, the temperature sensor 8 is positioned upstream of the obstruction body, in the embodiment of Figure 21, the temperature sensor 9 is positioned downstream of the obstruction body, and in the embodiment of Figure 22, the temperature sensor 9 is positioned in the obstruction body. In embodiment cases where large temperature differences are expected between the location of the first refractive index sensor and the location of the second refractive index sensor, the flowmeter can be equipped with two temperature sensors mounted adjacent to the refractive index sensors, as shown in Figure 23, to minimise the measurement error in the calculation of the fluid flow.

Figure 31 shows the definition of the aperture vector 41, which points into the space surrounding the body and is perpendicular to the plane that best fits the points on the edge of the aperture where the aperture has the smallest cross-section.

References:

1. Wanstall, C.T, A.K. Agrawal, and J.A. Bittle, Implications of real-gas behavior on refractive index calculations for optical diagnostics of fuel-air mixing at high pressures. Combustion and Flame, 2020. 214: p. 47-56.
2. Gladstone, J.H. and T.P. Dale, Researches on the Refraction, Dispersion, and Sensitiveness of Fluids. Philosophical Transactions of the Royal Society of London, 1863. 153: p. 317-343.
3. Pevec, S. and D. Donlagic, Miniature fiber-optic Fabry-Perot refractive index sensor for gas sensing with a resolution of 5x10(-9) RIU. Optics Express, 2018. 26(18): p. 23868-23882.
4. Pevec, S. and D. Donlagic, High resolution, all-fiber, micro-machined sensor for simultaneous measurement of refractive index and temperature. Optics Express, 2014. 22(13): p. 16241-16253.

**Claims**

1. A device for measuring fluid flow based on measurement of refractive indexes, wherein the device comprises a main pipeline (1) arranged to allow flow of the measured fluid, wherein said pipeline (1) comprises:

- a fluid flow obstacle (3, 21) arranged to provide a difference in refractive index of the fluid,

**characterized in that** the device further comprises:

- at least two fluid refractive index sensors (2, 4) provided in different parts of the pipeline (1), wherein:

- a first sensor is arranged in front of the obstacle (3, 21) and a second sensor is arranged in or behind the obstacle (3, 21), or
- the first sensor is arranged in the obstacle (3, 21), and the second sensor is behind the obstacle (3, 21), or
- both sensors are arranged in the obstacle (21),

- and a data processing system (5) arranged to connect to the sensors (2, 4), receive the refractive index data detected at each sensor and calculate the flow rate and/or the flow velocity of the fluid based on the measured refractive indexes.

2. The device according to claim 1, wherein said fluid flow obstacle (3, 21) is in the centre of the pipeline, near or on one of the sides, lower or upper, of the pipeline, and the fluid flow obstacle is implemented as:

a throttle body (3) , which is shaped as:

- a tapered pipeline of finite length,
- an orifice essentially made of a thin plate with at least one or more flow-through openings,
- a nozzle, or
- any shape which reduces the clear cross-section of the main pipeline in the main pipeline (1);

or
as an obstruction element (21), which is shaped as:

- any 3D shape, such as cylindrical bodies, dome-shaped bodies, square bodies, conical bodies and in general any body capable of obstructing flow, or
- a hollow body (22) having at least two apertures (23) to allow the flow of fluid and at least two inner chambers.

3. The device according to claim 2, wherein the obstruction element is shaped as a hollow body (22) with two or more apertures (23), wherein

- the hollow body (22) has one or more apertures (23), wherein the vector or vectors of the apertures are oriented in the upstream direction and one or more apertures, wherein the vector or vectors of the apertures are oriented in the downstream direction of the flow (12), or
- the hollow body (22) with one or more apertures (23), wherein the vector of apertures is oriented in the upstream direction and one or more apertures (23), wherein the vector of apertures is perpendicular to the direction of flow (12), or
- the hollow body (22) with one or more apertures (23), wherein the vectors of the apertures intersect in at least one projection at an angle f larger than 20°.
- The device faccording to claim 1, wherein the fluid flow obstacle is shaped as an obstruction (21).

4. The device according to any of the preceding claims, wherein at least one of said refractive index sensors (2, 4) are in contact with the obstacle (3, 21).

5. The device according to any of the preceding claims, which further comprises means (6) for displaying or forwarding information to a separate device, said means (6) arranged to display or forward to a user or a device data about detected volumetric, mass or molecular flow in real time.

6. The device according to any of the preceding claims, wherein the refractive index measurement point comprises a hydraulic connection line (10, 11) and the refractive index sensor (2, 4) so that the sensor (2, 4) is installed on a location away from the pipeline (1) or the area of the obstacle (3, 21).

7. The device according to any of the preceding claims, wherein said sensors (2, 4) are connected to the data processing system (5) via a dielectric waveguide (7), which is an optical fibre.

8. The device according to any of the preceding claims, wherein the first refractive index sensor (4) and the second refractive index sensor (2) comprise a Fabry-Perot interferometer.

9. The device according to any of the preceding claims, wherein the data processing system (5) comprises a sub-system for optical spectral analysis, which is preferably an optical spectral analyser or a laser with tunable wavelength.

10. The device according to any of the preceding claims except 4, wherein the fluid is gas and the data processing system (5) calculates volumetric gas flow as:

$$\phi_V = \alpha A \sqrt{2RT \frac{n_1 - n_2}{n_2 - 1}}$$

or:

$$\phi_V = \alpha A \sqrt{2R \frac{T_1 n_1 - T_2 n_2}{n_2 - 1}}$$

where $\alpha$ represents the flow coefficient, which can be treated as a constant at sufficiently large values of Reynolds number, A is the cross-section of the pipeline, R represents the gas constant, T is average absolute temperature, $T_1$ the temperature at the measurement site where $n_1$ is measured, $T_2$ the temperature at the measurement site where $n_2$ is measured, $n_1$ is refraction index measured with the second refractive index sensor (2) and $n_2$ is refraction index measured with the first refractive index sensor (4).

11. The device according to any of the preceding claims, wherein the fluid is gas and the data processing system (5) calculates mass fluid flow in case the measured fluid is gas as

$$\phi_m = \frac{\alpha A}{k} \sqrt{2RT(n_1 - n_2)(n_2 - 1)}$$

or:

$$\phi_m = 2\alpha A \frac{M}{\gamma N_A} \sqrt{2RT(n_1 - n_2)(n_2 - 1)}$$

where $\alpha$ represents the flow coefficient, which can be treated as a constant at sufficiently large values of Reynolds number, A is the cross-section of the pipeline, $k$ the Gladstone-Dale coefficient, R represents the gas constant, T is average absolute temperature, $T_1$ the temperature at the measurement site where $n_1$ is measured, $T_2$ the temperature at the measurement site where $n_2$ is measured, $n_1$ is refraction index measured with the second refractive index sensor (2) and $n_2$ is refraction index measured with the first refractive index sensor (4).

12. The device according to any of the preceding claims, wherein the fluid is gas and the system for data processing (5) calculates molecular flow of the fluid in case the measured fluid is gas as

$$\phi_M = \alpha A \frac{2}{\gamma N_A} \sqrt{2RT(n_1 - n_2)(n_2 - 1)}$$

or:

$$\phi_M = \alpha A \frac{2}{\gamma N_A} \sqrt{2R(T_1 n_1 - T_2 n_2)(n_2 - 1)}$$

where $\alpha$ represents the flow coefficient, which can be treated as a constant at sufficiently large values of Reynolds number, A is the cross-section of the pipeline, $\gamma$ polarizability of gas molecules, Na Avogadro number, R represents the gas constant, T is average absolute temperature, $T_1$ the temperature at the measurement site where $n_1$ is measured, $T_2$ the temperature at the measurement site where $n_2$ is measured, $n_1$ is refraction index measured with the second refractive index sensor (2) and $n_2$ is refraction index measured with the first refractive index sensor (4).

13. The device according to any of the preceding claims, wherein the device further comprises at least one temperature sensor (8, 9) connected to the data processing system (5), wherein at least one temperature sensor (8, 9) is optical and is connected to the data processing system (5) with an optical fibre, and wherein adjacent to the at least one refractive index sensor the temperature sensor is located, said temperature sensor being connected to the data processing system.

14. The device according to any of the preceding claims, wherein the refractive index sensors are arranged to measure absolute temperature in addition to the refractive index, and connected to the data processing system with an optical fibre.

15. A method for measurement of fluid flow using the device for measurement of fluid flow according to any of the preceding claims, wherein the method comprises the following steps:

    a) measurement of at least two refractive indexes of the fluid using at least two refractive index sensors,
    b) calculation of flow velocity using data obtained in step a).

16. The method according to claim 16, wherein the fluid is gas and for calculation of velocity in step b) equation

$$v = \alpha \sqrt{2RT\frac{n_1 - n_2}{n_2 - 1}}$$

or equation

$$v = \alpha \sqrt{2R\frac{T_1 n_1 - T_2 n_2}{n_2 - 1}}$$

is used.

17. The method according to claim 16 or 17, which further comprises a step of:
c) calculation of volumetric and/or mass and/or molecular flow, wherein:

    - Volumetric flow is calculated using data obtained in step a) or step b) and equation

$$\phi_V = \alpha A \sqrt{2RT\frac{n_1 - n_2}{n_2 - 1}}$$

or equation

$$\phi_V = \alpha\, A \sqrt{2R\frac{T_1 n_1 - T_2 n_2}{n_2 - 1}} \quad ,$$

and/or
- mass flow is calculated using data obtained in step a) or step b) and equation

$$\phi_m = {} = \frac{\alpha A}{k} \sqrt{2RT(n_1 - n_2)(n_2 - 1)}$$

or equation

$$\phi_m = \frac{\alpha A}{k} \sqrt{2R(T_1 n_1 - T_2 n_2)(n_2 - 1)},$$

and/or

- molecular flow is calculated using data obtained in step a) or step b) and equation

$$\phi_M = \frac{\phi_m}{M} = \alpha A \frac{2}{\gamma N_A} \sqrt{2RT(n_1 - n_2)(n_2 - 1)}$$

or equation

$$- \quad \phi_M = \frac{\phi_m}{M} = \alpha A \frac{2}{\gamma N_A} \sqrt{2R(T_1 n_1 - T_2 n_2)(n_2 - 1)}.$$

**Patentansprüche**

1. Vorrichtung zur Messung eines Fluiddurchflusses basierend auf einer Messung von Brechungsindezes, wobei die Vorrichtung eine Hauptrohrleitung (1) umfasst, die so ausgelegt ist, dass sie den Durchfluss des gemessenen Fluids ermöglicht, wobei die Hauptrohrleitung (1) Folgendes umfasst:

    - ein Fluiddurchflusshindernis (3, 21) , das so ausgelegt ist, dass es einen Unterschied in dem Brechungsindex des Fluids erzeugt,

    **dadurch gekennzeichnet, dass** die Vorrichtung ferner umfasst:

    - mindestens zwei Fluidbrechungsindexsensoren (2, 4), die in unterschiedlichen Teilen der Rohrleitung (1) vorgesehen sind, wobei:

        ◦ ein erster Sensor vor dem Hindernis (3, 21) angeordnet ist, und ein zweiter Sensor im oder hinter dem Hindernis (3, 21) angeordnet ist, oder
        ◦ der erste Sensor in dem Hindernis (3, 21) angeordnet ist, und der zweite Sensor hinter dem Hindernis (3, 21) angeordnet ist, oder
        ◦ beide Sensoren in dem Hindernis (21) angeordnet sind,

    - und ein Datenverarbeitungssystem (5), das ausgelegt ist, um mit den Sensoren (2, 4) verbunden zu werden, die an jedem Sensor erkannten Brechungsindexdaten zu empfangen und basierend auf den gemessenen Brechungsindizes die Durchflussrate und/oder die Durchflussgeschwindigkeit des Fluids zu berechnen.

2. Die Vorrichtung nach Anspruch 1, wobei sich das Fluiddurchflusshindernis (3, 21) in der Mitte der Rohrleitung, nahe oder an einer der Seiten, unterhalb oder oberhalb der Rohrleitung, befindet und das Fluiddurchflusshindernis implementiert ist als:

    ein Drosselklappenkörper (3) , der ausgebildet ist als:

        ◦ eine sich verjüngende Rohrleitung endlicher Länge,
        ◦ eine im Wesentlichen aus einer dünnen Platte geformte Öffnung mit mindestens einer oder mehreren Durchflussöffnungen,
        ◦ eine Düse, oder
        ◦ eine beliebige Form, die den lichten Querschnitt der Hauptrohrleitung in der Hauptrohrleitung (1) verringert;

    oder
    als Blockierelement (21), das ausgebildet ist als:

        ◦ eine beliebige dreidimensionale Form, wie zylindrische Körper, kuppelförmige Körper, quadratische Körper, konische Körper und allgemein jeder Körper, der den Durchfluss behindern kann, oder
        ◦ ein Hohlkörper (22) mit mindestens zwei Durchlässen (23), um den Fluiddurchfluss zu ermöglichen, und mindestens zwei inneren Kammern.

3. Die Vorrichtung nach Anspruch 2, wobei das Blockierelement als Hohlkörper (22) mit zwei oder mehr Durchlässen (23) ausgebildet ist, wobei

 - der Hohlkörper (22) einen oder mehrere Durchlässe (23) aufweist, wobei der Vektor oder die Vektoren der Durchlässe stromaufwärts ausgerichtet sind, und eine oder mehrere Durchlässe aufweist, wobei der Vektor oder die Vektoren der Durchlässe stromabwärts des Durchflusses (12) ausgerichtet sind, oder
 - der Hohlkörper (22) mit einem oder mehreren Durchlässen (23), wobei der Vektor oder die Vektoren der Durchlässe stromaufwärts ausgerichtet sind, und einem oder mehreren Durchlässen (23), wobei der Vektor der Durchlässe senkrecht zu der Richtung des Durchflusses (12) ausgerichtet ist, oder
 - der Hohlkörper (22) mit einem oder mehreren Durchlässen (23), wobei sich die Vektoren der Durchlässe in mindestens einer Projektion in einem Winkel f größer als 20° schneiden.
 - Die Vorrichtung nach Anspruch 1, wobei das Fluiddurchflusshindernis als eine Blockierung ausgebildet ist (21).

4. Die Vorrichtung nach einem der vorstehenden Ansprüche, wobei mindestens einer der Brechungsindexsensoren (2, 4) mit dem Hindernis (3, 21) in Kontakt steht.

5. Die Vorrichtung nach einem der vorstehenden Ansprüche, die ferner Mittel (6) zum Anzeigen oder Weiterleiten von Informationen an eine separate Vorrichtung umfasst, wobei die Mittel (6) so ausgelegt sind, dass sie einem Benutzer oder einer Vorrichtung Daten über den erkannten Volumen-, Massen- oder Moleculardurchfluss in Echtzeit anzeigen oder weiterleiten.

6. Die Vorrichtung nach einem der vorstehenden Ansprüche, wobei der Brechungsindexmesspunkt eine hydraulische Verbindungsleitung (10, 11) und den Brechungsindexsensor (2, 4) umfasst, sodass der Sensor (2, 4) an einer Stelle installiert ist, die von der Rohrleitung (1) oder dem Bereich des Hindernisses (3, 21) entfernt ist.

7. Die Vorrichtung nach einem der vorstehenden Ansprüche, wobei die Sensoren (2, 4) über einen dielektrischen Wellenleiter (7), der eine optische Faser ist, mit dem Datenverarbeitungssystem (5) verbunden sind.

8. Die Vorrichtung nach einem der vorstehenden Ansprüche, wobei der erste Brechungsindexsensor (4) und der zweite Brechungsindexsensor (2) ein Fabry-Perot-Interferometer umfassen.

9. Die Vorrichtung nach einem der vorstehenden Ansprüche, wobei das Datenverarbeitungssystem (5) ein Teilsystem für die optische Spektralanalyse umfasst, das vorzugsweise ein optischer Spektralanalysator oder ein Laser mit abstimmbarer Wellenlänge ist.

10. Die Vorrichtung nach einem der vorstehenden Ansprüche außer 4, wobei das Fluid ein Gas ist und das Datenverarbeitungssystem (5) den volumetrischen Gasdurchfluss berechnet als:

$$\phi_V = \alpha A \sqrt{2RT \frac{n_1 - n_2}{n_2 - 1}}$$

oder:

$$\phi_V = \alpha A \sqrt{2R \frac{T_1 n_1 - T_2 n_2}{n_2 - 1}}$$

wobei $\alpha$ den Durchflusskoeffizienten darstellt, der bei ausreichend großen Reynolds-Zahlen als konstant angenommen werden kann, $A$ der Querschnitt der Rohrleitung ist, $R$ die Gaskonstante darstellt, $T$ die durchschnittliche absolute Temperatur ist, $T_1$ die Temperatur an der Messstelle ist, wo $n_1$ gemessen wird, $T_2$ die Temperatur an der Messstelle ist, wo $n_2$ gemessen wird, $n_1$ der mit dem zweiten Brechungsindexsensor (2) gemessene Brechungsindex ist, und $n_2$ der mit dem ersten Brechungsindexsensor (4) gemessene Brechungsindex ist.

17

**11.** Die Vorrichtung nach einem der vorstehenden Ansprüche, wobei das Fluid Gas ist und das Datenverarbeitungssystem (5) den Massendurchfluss des Fluids, sofern das gemessene Fluid Gas ist, berechnet als:

$$\phi_m = \frac{\alpha A}{k} \sqrt{2RT(n_1 - n_2)(n_2 - 1)}$$

oder:

$$\phi_m = 2\alpha A \frac{M}{\gamma N_A} \sqrt{2RT(n_1 - n_2)(n_2 - 1)}$$

wobei $\alpha$ den Durchflusskoeffizienten darstellt, der bei ausreichend großen Reynolds-Zahlen als konstant angenommen werden kann, $A$ der Querschnitt der Rohrleitung ist, k der Gladstone-Dale-Koeffizient ist, R die Gaskonstante darstellt, T die durchschnittliche absolute Temperatur ist, $T_1$ die Temperatur an der Messstelle ist, wo $n_1$ gemessen wird, $T_2$ die Temperatur an der Messstelle ist, wo $n_2$ gemessen wird, $n_1$ der mit dem zweiten Brechungsindexsensor (2) gemessene Brechungsindex ist, und $n_2$ der mit dem ersten Brechungsindexsensor (4) gemessene Brechungsindex ist.

**12.** Die Vorrichtung nach einem der vorstehenden Ansprüche, wobei das Fluid Gas ist und das System für die Verarbeitung (5) von Daten den Molekulardurchfluss des Fluids, sofern das gemessene Fluid Gas ist, berechnet als:

$$\phi_M = \alpha A \frac{2}{\gamma N_A} \sqrt{2RT(n_1 - n_2)(n_2 - 1)}$$

oder:

$$\phi_M = \alpha A \frac{2}{\gamma N_A} \sqrt{2R(T_1 n_1 - T_2 n_2)(n_2 - 1)}$$

wobei $\alpha$ den Durchflusskoeffizienten darstellt, der bei ausreichend großen Reynolds-Zahlen als konstant angenommen werden kann, A der Querschnitt der Rohrleitung ist, $\gamma$ die Polarisierbarkeit von Gasmolekülen ist, Na die Avogadro-Zahl ist, R die Gaskonstante darstellt, T die durchschnittliche absolute Temperatur ist, $T_1$ die Temperatur an der Messstelle ist, wo $n_1$ gemessen wird, $T_2$ die Temperatur an der Messstelle ist, wo $n_2$ gemessen wird, $n_1$ der mit dem zweiten Brechungsindexsensor (2) gemessene Brechungsindex ist, und $n_2$ der mit dem ersten Brechungsindexsensor (4) gemessene Brechungsindex ist.

**13.** Die Vorrichtung nach einem der vorstehenden Ansprüche, wobei die Vorrichtung ferner mindestens einen Temperatursensor (8, 9) umfasst, der mit dem Datenverarbeitungssystem (5) verbunden ist, wobei mindestens ein Temperatursensor (8, 9) optisch ist und mit einer optischen Faser mit dem Datenverarbeitungssystem (5) verbunden ist, und wobei sich der Temperatursensor in unmittelbarer Nähe des mindestens einen Brechungsindexsensors befindet, wobei der Temperatursensor mit dem Datenverarbeitungssystem verbunden ist.

**14.** Die Vorrichtung nach einem der vorstehenden Ansprüche, wobei die Brechungsindexsensoren so angeordnet sind, dass sie zusätzlich zu dem Brechungsindex auch die absolute Temperatur messen, und mit einer optischen Faser mit dem Datenverarbeitungssystem verbunden sind.

**15.** Verfahren zur Messung eines Fluiddurchflusses unter Verwendung der Vorrichtung für die Messung des Fluiddurchflusses nach einem der vorstehenden Ansprüche, wobei das Verfahren die folgenden Schritte umfasst:

a) Messung von mindestens zwei Brechungsindizes des Fluids unter Verwendung von mindestens zwei Brechungsindexsensoren,
b) Berechnung der Durchflussgeschwindigkeit unter Verwendung der in Schritt a) erhaltenen Daten.

**16.** Verfahren nach Anspruch 16, wobei das Fluid Gas ist und für die Geschwindigkeitsberechnung in Schritt b) Gleichung

$$v = \alpha \sqrt{2RT\frac{n_1 - n_2}{n_2 - 1}}$$

oder Gleichung

$$v = \alpha \sqrt{2R\frac{T_1 n_1 - T_2 n_2}{n_2 - 1}}$$

verwendet wird.

**17.** Verfahren nach Anspruch 16 oder 17, ferner umfassend einen Schritt der:
c) Berechnung des Volumendurchflusses und/oder Massendurchflusses und/oder Molekulardurchflusses, wobei:

- der Volumendurchfluss unter Verwendung der in Schritt a) oder Schritt b) erhaltenen Daten und der Gleichung

$$\phi_V = \alpha A \sqrt{2RT\frac{n_1 - n_2}{n_2 - 1}}$$

oder Gleichung

$$\phi_V = \alpha\, A\, \sqrt{2R\frac{T_1 n_1 - T_2 n_2}{n_2 - 1}}\ ,$$

berechnet wird, und/oder
- der Massendurchfluss unter Verwendung der in Schritt a) oder Schritt b) erhaltenen Daten und der Gleichung

$$\phi_m = \; = \frac{\alpha A}{k}\sqrt{2RT(n_1 - n_2)(n_2 - 1)}$$

oder Gleichung

$$\phi_m = \frac{\alpha A}{k}\sqrt{2R(T_1 n_1 - T_2 n_2)(n_2 - 1)},$$

berechnet wird, und/oder
- der Molekulardurchfluss unter Verwendung der in Schritt a) oder Schritt b) erhaltenen Daten und der Gleichung

$$\phi_M = \frac{\phi_m}{M} = \alpha A \frac{2}{\gamma N_A}\sqrt{2RT(n_1 - n_2)(n_2 - 1)}$$

oder Gleichung

$$-\quad \phi_M = \frac{\phi_m}{M} = \alpha A \frac{2}{\gamma N_A}\sqrt{2R(T_1 n_1 - T_2 n_2)(n_2 - 1)}.$$

**Revendications**

1. Dispositif de mesure d'un débit de fluide sur la base d'une mesure de l'indice de réfraction des fluides, et procédé de détermination d'un débit de fluide et d'une vitesse d'écoulement, ledit dispositif comprenant une canalisation principale (1) conçue pour permettre l'écoulement du fluide mesuré, ladite canalisation (1) comprenant :

   - un obstacle à l'écoulement du fluide (3, 21) , conçu pour fournir une différence dans l'indice de réfraction du fluide,

   **caractérisé par le fait que** le dispositif comprend également :

   - au moins deux capteurs d'indice de réfraction de fluide (2, 4) placés dans des parties différentes de la canalisation (1), où :

      ◦ un premier capteur est disposé devant l'obstacle (3, 21) et un second capteur est disposé dans ou derrière l'obstacle (3, 21), ou
      v le premier capteur est disposé dans l'obstacle (3, 21), et le second capteur est derrière l'obstacle (3, 21), ou
      ◦ les deux capteurs sont disposés dans l'obstacle (21),

   - et un système de traitement des données (5) conçu pour être raccordé aux capteurs (2, 4), recevoir les données d'indice de réfraction détectées par chaque capteur et calculer le débit et/ou la vitesse d'écoulement du fluide sur la base des indices de réfraction mesurés.

2. Dispositif selon la revendication 1, dans lequel ledit obstacle à l'écoulement du fluide (3, 21) est au centre de la canalisation, près d'un côté ou sur un côté, inférieur ou supérieur, de la canalisation, et l'obstacle à l'écoulement est mis en oeuvre sous la forme de :

   un organe d'étranglement (3) , qui a la forme :

      ◦ d'une conduite conique de longueur finie,
      ◦ d'une ouverture constituée essentiellement d'une plaque fine comportant au moins un ou plusieurs orifices d'écoulement,
      ◦ d'une tuyère, ou
      ◦ de toute forme réduisant la section de passage de la canalisation principale, dans la canalisation principale (1) ;

   ou
   d'un élément faisant obstruction à l'écoulement (21), qui peut prendre la forme :

      ◦ de toute figure en 3D, telle que des corps cylindriques, des corps en forme de dôme, des corps carrés, des corps coniques et de façon générale tout corps pouvant faire obstruction à l'écoulement, ou
      ◦ d'un corps creux (22) ayant au moins deux ouvertures (23) pour permettre l'écoulement du fluide et au moins deux chambres internes.

3. Dispositif selon la revendication 2, dans lequel l'élément d'obstruction a la forme d'un corps creux (22) ayant deux ouvertures ou davantage (23), où

   - le corps creux (22) a une ouverture ou davantage (23), où l'axe ou les axes des ouvertures est/sont orienté(s) vers l'amont, et une ouverture ou davantage, où l'axe ou les axes des ouvertures est/sont orienté(s) vers l'aval (12), ou
   - le corps creux (22) ayant une ouverture ou davantage (23), où l'axe des ouvertures est orienté vers l'amont, et une ouverture ou davantage (23), où l'axe des ouvertures est perpendiculaire au sens de l'écoulement (12), ou
   - le corps creux (22) ayant une ouverture ou davantage (23), où les axes des ouvertures se croisent dans au moins un plan de projection à un angle f supérieur à 20 °.
   - Dispositif selon la revendication 1, où l'obstacle à l'écoulement du fluide a la forme d'un élément faisant obstruction (21).

4. Dispositif selon l'une quelconque des revendications précédentes, où au moins un desdits capteurs d'indice de réfraction (2, 4) est en contact avec l'obstacle (3, 21).

5. Dispositif selon l'une quelconque des revendications précédentes, qui comprend en outre des moyens (6) d'afficher ou de transmettre des informations vers un appareil séparé, lesdits moyens (6) étant conçus pour afficher ou transmettre vers un utilisateur ou un appareil des données concernant le débit volumétrique, massique ou moléculaire détecté en temps réel.

6. Dispositif selon l'une quelconque des revendications précédentes, dans lequel le point de mesure de l'indice de réfraction comprend une ligne de raccordement hydraulique (10, 11) et le capteur d'indice de réfraction (2, 4) de façon à ce que le capteur (2, 4) soit installé à distance de la canalisation (1) ou de la zone de l'obstacle (3, 21).

7. Dispositif selon l'une quelconque des revendications précédentes, dans lequel lesdits capteurs (2, 4) sont raccordés au système de traitement des données (5) par le biais un guide d'onde diélectrique (7), constitué par une fibre optique.

8. Dispositif selon l'une quelconque des revendications précédentes, dans lequel le premier capteur d'indice de réfraction (4) et le second capteur d'indice de réfraction (2) comprennent un interféromètre de Fabry-Pérot.

9. Dispositif selon l'une quelconque des revendications précédentes, dans lequel le système de traitement des données (5) comprend un sous-système pour l'analyse spectrale optique, qui est de préférence un analyseur spectral optique ou un laser à longueur d'onde réglable.

10. Dispositif selon l'une quelconque des revendications précédentes sauf la 4, dans lequel le fluide est un gaz et le système de traitement des données (5) calcule le débit volumétrique du gaz de la façon suivante :

$$\phi_V = \alpha A \sqrt{2RT \frac{n_1 - n_2}{n_2 - 1}}$$

ou :

$$\phi_V = \alpha A \sqrt{2R \frac{T_1 n_1 - T_2 n_2}{n_2 - 1}}$$

où $\alpha$ représente le coefficient de débit, qui peut être considéré comme une constante pour des nombres de Reynolds suffisamment élevés, A est la section de la canalisation, R représente la constante des gaz, T est la température absolue moyenne, $T_1$ la température sur le site de mesure où $n_1$ est mesuré, $T_2$ la température sur le site de mesure où $n_2$ est mesuré, $n_1$ est l'indice de réfraction mesuré par le second capteur d'indice de réfraction (2) et $n_2$ est l'indice de réfraction mesuré par le premier capteur d'indice de réfraction (4).

11. Dispositif selon l'une quelconque des revendications précédentes, dans lequel le fluide est un gaz et le système de traitement des données (5) calcule le débit massique du fluide quand le fluide mesuré est un gaz, de la façon suivante

$$\phi_m = \frac{\alpha A}{k} \sqrt{2RT(n_1 - n_2)(n_2 - 1)}$$

ou :

$$\phi_m = 2\alpha A \frac{M}{\gamma N_A} \sqrt{2RT(n_1 - n_2)(n_2 - 1)}$$

où $\alpha$ représente le coefficient de débit, qui peut être considéré comme une constante pour des nombres de Reynolds suffisamment élevés, A est la section de la canalisation, k le coefficient de Gladstone-Dale, R représente la constante des gaz, T est la température absolue moyenne, $T_1$ la température sur le site de mesure où $n_1$ est mesuré, $T_2$ la

température sur le site de mesure où $n_2$ est mesuré, $n_1$ est l'indice de réfraction mesuré par le second capteur d'indice de réfraction (2) et $n_2$ est l'indice de réfraction mesuré par le premier capteur d'indice de réfraction (4).

12. Dispositif selon l'une quelconque des revendications précédentes, dans lequel le fluide est un gaz et le système de traitement des données (5) calcule le débit moléculaire du fluide quand le fluide mesuré est un gaz, de la façon suivante

$$\phi_M = \alpha A \frac{2}{\gamma N_A} \sqrt{2RT(n_1 - n_2)(n_2 - 1)}$$

ou :

$$\phi_M = \alpha A \frac{2}{\gamma N_A} \sqrt{2R(T_1 n_1 - T_2 n_2)(n_2 - 1)}$$

où $\alpha$ représente le coefficient de débit, qui peut être considéré comme une constante pour des nombres de Reynolds suffisamment élevés, A est la section de la canalisation, $\gamma$ la polarisabilité des molécules gazeuses, Na le nombre d'Avogadro, R représente la constante des gaz, T est la température absolue moyenne, $T_1$ la température sur le site de mesure où $n_1$ est mesuré, $T_2$ la température sur le site de mesure où $n_2$ est mesuré, $n_1$ est l'indice de réfraction mesuré par le second capteur d'indice de réfraction (2) et $n_2$ est l'indice de réfraction mesuré par le premier capteur d'indice de réfraction (4).

13. Dispositif selon l'une quelconque des revendications précédentes, où le dispositif comprend en outre au moins un capteur de température (8, 9) raccordé au système de traitement des données (5), où au moins un capteur de température (8, 9) est optique et est raccordé au système de traitement des données (5) par fibre optique, et où un capteur de température est situé à proximité immédiate d'au moins un capteur d'indice de réfraction, ledit capteur de température étant raccordé au système de traitement des données.

14. Dispositif selon l'une quelconque des revendications précédentes, dans lequel les capteurs d'indice de réfraction sont conçus pour mesurer la température absolue en plus de l'indice de réfraction, et sont raccordés au système de traitement des données par fibre optique.

15. Procédé de détermination du débit d'un fluide à l'aide du dispositif de mesure de débit de fluide selon l'une quelconque des revendications précédentes, où le procédé comprend les étapes suivantes :

a) la mesure d'au moins deux indices de réfraction du fluide à l'aide d'au moins deux capteurs d'indice de réfraction,
b) le calcul de la vitesse d'écoulement à l'aide des données obtenues à l'étape a).

16. Procédé selon la revendication 16, dans lequel le fluide est un gaz, et pour le calcul de la vitesse à l'étape b), l'équation

$$v = \alpha \sqrt{2RT \frac{n_1 - n_2}{n_2 - 1}}$$

ou l'équation

$$v = \alpha \sqrt{2R \frac{T_1 n_1 - T_2 n_2}{n_2 - 1}}$$

est utilisée.

**17.** Procédé selon la revendication 16 ou 17, qui comprend en outre une étape de :

c) calcul du débit volumétrique et/ou massique et/ou moléculaire, où :

- le débit volumétrique est calculé à l'aide des données obtenues à l'étape a) ou à l'étape b), et l'équation

$$\phi_V = \alpha A \sqrt{2RT \frac{n_1 - n_2}{n_2 - 1}}$$

ou l'équation

$$\phi_V = \alpha\ A \sqrt{2R \frac{T_1 n_1 - T_2 n_2}{n_2 - 1}}\ ,$$

et/ou

- le débit massique est calculé à l'aide des données obtenues à l'étape a) ou à l'étape b), et l'équation

$$\phi_m = \ = \frac{\alpha A}{k}\ \sqrt{2RT(n_1 - n_2)(n_2 - 1)}$$

ou l'équation

$$\phi_m = \frac{\alpha A}{k}\ \sqrt{2R(T_1 n_1 - T_2 n_2)(n_2 - 1)},$$

et/ou

- le débit moléculaire est calculé à l'aide des données obtenues à l'étape a) ou à l'étape b), et l'équation

$$\phi_M = \frac{\phi_m}{M} = \alpha A \frac{2}{\gamma N_A}\ \sqrt{2RT(n_1 - n_2)(n_2 - 1)}$$

ou l'équation

$$-\quad \phi_M = \frac{\phi_m}{M} = \alpha A \frac{2}{\gamma N_A}\ \sqrt{2R(T_1 n_1 - T_2 n_2)(n_2 - 1)}.$$

Fig. 1a

Fig. 1b

Fig. 2

Fig. 3

Fig. 4

Fig. 5

Fig. 6

Fig. 7

Fig. 8

Fig. 9

Fig. 10

Fig. 11

Fig. 14

Fig. 12

Fig. 15

Fig. 13

Fig. 16

Fig. 17

Fig. 18

Fig. 19

Fig. 20

Fig. 21

Fig. 22

Fig. 23

Fig. 24

Fig. 25

Fig. 26

Fig. 27

EP 4 533 037 B1

Fig. 28

Fig. 29

Fig. 30

Fig. 31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6386050 B1
- KR 101605653 B1
- EP 3239720 A
- EP 0967466 A

### Non-patent literature cited in the description

- **WANSTALL, C.T** ; **A.K. AGRAWAL** ; **J.A. BITTLE**. Implications of real-gas behavior on refractive index calculations for optical diagnostics of fuel-air mixing at high pressures.. *Combustion and Flame*, 2020, vol. 214, 47-56
- **GLADSTONE, J.H.** ; **T.P. DALE**. Researches on the Refraction, Dispersion, and Sensitiveness of Fluids.. *Philosophical Transactions of the Royal Society of London*, vol. 1863 (153), 317-343
- **PEVEC, S.** ; **D. DONLAGIC**. Miniature fiber-optic Fabry-Perot refractive index sensor for gas sensing with a resolution of 5x10(-9) RIU.. *Optics Express*, 2018, vol. 26 (18), 23868-23882
- **PEVEC, S.** ; **D. DONLAGIC**. High resolution, all-fiber, micro-machined sensor for simultaneous measurement of refractive index and temperature.. *Optics Express*, 2014, vol. 22 (13), 16241-16253